# FASCICULE DE BREVET EUROPEEN

(11) **EP 1 309 638 B1**
(45) Date de publication et mention de la délivrance du brevet: **15.09.2004**
(21) Numéro de dépôt: 01956640.5
(22) Date de dépôt: 25.07.2001
(51) Int. Cl.: C08G 2/38, C08F 293/00, C08G 77/28, C08G 77/392, C08F 283/12

(54) **PROCEDE DE SYNTHESE DE COPOLYMERES HYBRIDES SILICONES ET ORGANIQUES PAR POLYMERISATION RADICALAIRE CONTROLEE**
HERSTELLUNGSVERFAHREN VON SILICIUMORGANISCHEN HYBRIDCOPOLYMEREN DURCH KONTROLLIERTE RADIKALISCHE POLYMERISATION
METHOD FOR SYNTHESIS OF HYBRID SILICONE AND ORGANIC COPOLYMER BY CONTROLLED FREE RADICAL POLYMERISATION

(30) Priorité: 25.07.2000 FR 0009722
(43) Date de publication de la demande: 14.05.2003
(73) Titulaire: RHODIA CHIMIE, 92512 Boulogne Billancourt Cedex (FR)
(72) Inventeur: DESTARAC, Mathias, F-75013 Paris (FR); MIGNANI, Gérard, F-69008 Lyon (FR); ZARD, Samir, F-91190 Gif-sur-Yvette (FR); SIRE, Béatrice, F-91120 Palaiseau (FR); KALAI, Chakib, F-75014 Paris (FR)
(74) Mandataire: Trolliet, Maurice
(86) Numéro de dépôt international: PCT/FR2001/002433
(87) Numéro de publication internationale: WO 2002/008307

(56) Documents cités:
- EP-A- 0 392 947
- EP-A- 0 421 588
- WO-A-98/58974
- SINGER H ET AL: "ALPHA,OMEGA-FUNKTIONALISIERTE OLIGOMERE - EINE NEUERE ANWENDUNG DER EMULSIONSPOLYMERISATION" , FASERFORSCHUNG UND TEXTILTECHNIK,DE,BERLIN, VOL. 28, NR. 9, PAGE(S) 435-438 XP002049825 ISSN: 0014-8628 le document en entier

## Description

La présente invention concerne un nouveau procédé de polymérisation radicalaire contrôlée par voie thermique donnant accès à des copolymères de natures silicone et organique ainsi que les produits obtenus par ce procédé. Ces produits copolymères obtenus sont constitués d'un squelette silicone sur lequel sont greffés des groupements organiques sous forme bloc ou multibloc.

Les polymères à blocs sont habituellement préparés par polymérisation ionique. Ce type de polymérisation présente l'inconvénient de ne permettre la polymérisation que de certains types de monomères apotaires, notamment le styrène et le butadiène, et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Cependant, jusqu'à récemment il n'existait pas de procédé de polymérisation radicalaire permettant d'obtenir des polymères à blocs. Depuis peu, un nouveau procédé de polymérisation radicalaire s'est développé : il s'agit de la polymérisation radicalairé dite "contrôlée" ou "vivante" (Matyjaszewski, K., Ed. *Controlled Radical Polymerization*; ACS Symposium Series 685; American Chemical Society: Washington, DC, 1998). Dans ces systèmes, des réactions de terminaison ou de transfert réversible permettent de maintenir les extrémités actives tout au long de la polymérisation, donnant par conséquent accès à divers copolymères à blocs.

Des copolymères à blocs sont obtenus lorsque les extrémités de chaînes de polymères sont activées sous forme de radical par scission homolytique réversible de liaison (par exemple C-O, ou C-Halogène).

La publication WO 98/58974 décrit un procédé de polymérisation radicalaire vivante permettant d'accéder à des copolymères à blocs par un procédé sans irradiation UV, par mise en oeuvre de composés xanthates. Les publications WO 99/35177 et WO 99/35178 décrivent des procédés de polymérisation radicalaire vivante contrôlé par des composés dithiocarbamates ou des composés dithioesters.

Les techniques de polymérisation radicalaire vivante concernent principalement des (co)polymères organiques. Toutefois, la synthèse de copolymères à blocs organique-inorganique a été aussi décrite; à ce sujet, on peut se reporter à la publication EP 421 588.

Cependant, les techniques décrites présentent certains désavantages. Par exemple, la nature des blocs organiques est fimitée. De plus, il n'est pas possible jusqu'a présent de bénéficier d'une méthode de préparation à la fois facile à mettre en oeuvre, permettant de polymériser un très grand nombre de monomères organiques, et donnant accès à des blocs de longueur bien contrôlée et de distribution moléculaire étroite.

A présent, un nouveau procédé de préparation de polymères hybrides silicones et organiques a été mis au point. Cette nouvelle voie présente l'avantage de ne pas nécessiter l'utilisation d'une source d'irradiation UV, difficile à mettre en oeuvre industriellement.

D'autre part, ce nouveau procédé permet de synthétiser des copolymères hybrides silicones et organiques dont la nature des monomères organiques polymérisés est très variée.

Un autre but est de proposer un procédé de polymérisation radicalaire contrôlée pour la synthèse de copolymères silicones et organiques ne contenant pas d'impuretés métalliques néfastes à leur utilisation.

Un autre but est d'obtenir des blocs organiques de longueurs contrôlées. Un autre but est d'obtenir des blocs organiques de distribution moléculaire étroite.

Un autre but est la mise au point d'un procédé pouvant être mis en oeuvre en solution, en masse, en dispersion, en suspension ou en émulsion, préférentiellement en solution et en émulsion.

Ces buts sont atteints par la présente invention qui concerne un procédé de préparation par polymérisation radicalaire sous activation thermique de copolymères hybrides silicones et organiques constitués d'un squelette silicone et porteurs de groupements organiques et préparés à partir d'un précurseur silicone, d'au moins un monomère éthyléniquement insaturé organique et d'un initiateur de polymérisation radicalaire.

L'invention concerne également les copolymères hybrides susceptibles d'être obtenus par le procédé ci-dessus.

Enfin, l'invention concerne les silicones précurseurs ainsi que leurs procédés d'obtention, utilisées pour la préparation des copolymères hybrides.

D'autres détails et avantages de l'invention apparaîtront plus clairement à la lecture de la description et des exemples.

L'invention concerne donc tout d'abord un procédé de préparation par activation thermique de copolymères hybrides silicones et organiques comprenant des motifs **(I)** :

RₓU_{y}SiO_{[4-(x+y)]/2} (I)

dans lesquels:
- x est égal à 0, 1, 2 ou 3, y est égal à 0, 1, 2 ou 3 avec 2 ≤ (x+y) ≤ 3 et y est différent de 0 pour au moins un des motifs du copolymère hybride,
   - les symboles R, identiques ou différents, représentent :
      · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
      · un radical cycloalkyle contenant entre 5 et 8 atomes de carbone cycliques, éventuellement substitué,
      · un radical aryle contenant entre 6 et 12 atomes de carbone pouvant être substitué, de préférence phényle ou dichlorophényle,
      · une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
   - les symboles U, identiques ou différents, représentent **(II)**: 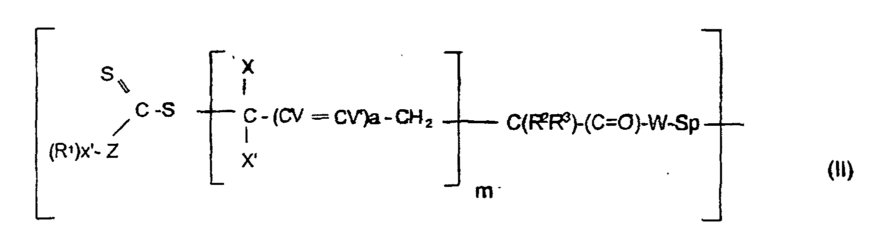 dans lequel :
      - x' = 1, 2,3 ou 4 en fonction de la valence de Z,
      - Z, identiques ou différents, représentent .un atome de carbone, soufre, oxygène, phosphore, azote et/ou une valence libre,
      - R¹, identiques ou différents, représentent :
         - un groupe (i) alkyle, acyle, aryle, alcène ou alcyne éventuellement substitué,
         - un cycle (ii) carboné, saturé ou non, éventuellement substitué et/ou aromatique, et/ou
         - un hétérocycle (iii), saturé ou non, éventuellement substitué,
         - ces radicaux (i), (ii) et (iii) pouvant être substitués avantageusement par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
         - un groupement (iv) de formule -CₙF₍₂ₙ₊₁₎ avec n compris entre 1 et 20,
         - un groupement (v) de formule suivante : 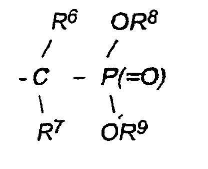 dans laquelle :
            - R⁶, R⁷, identiques ou non, sont choisis parmi un groupe halogène, -NO₂, -SO₃R¹⁰, -NCO, -CN, -OR¹⁰, -SR¹⁰, -N(R¹⁰)₂, -COOR¹⁰, -O₂CR¹⁰, -CON(R¹⁰)₂, -NCO(R¹⁰)₂ et -CₙF₍₂ₙ₊₁₎ avec n compris entre 1 et 20, de préférence égal à 1;
            - avec R¹⁰ représentant :
               * un atome d'hydrogène,
               * ou un radical alkyle, alcényle, alcynyle, cycloacényle, cycloalcynyle, alkaryle, aralkyle, hétéroaryle ou aryle éventuellement condensé à un hétérocycle aromatique ou non; ces radicaux pouvant éventuellement être substitués par :
                  . un ou plusieurs groupes identiques ou différents, choisis parmi les atomes d'halogènes, =O, =S, -OH, alcoxy, SH, thioalcoxy, NH₂, mono ou di-alkylamino, CN, COOH, ester, amide, CₙF₍₂ₙ₊₁₎ et/ou éventuellement interrompu par un ou plusieurs atomes choisis parmi O, S, N, P ;
                  . ou un groupe hétérocyclique éventuellement substitué par un ou plusieurs groupes tels que définis précédemment ;
                  . ou R⁶ et R⁷ forment ensemble avec l'atome de carbone auquel ils sont attachés, un groupe =O, =S, un cycle hydrocarboné ou un hétérocycle ;
            - et R⁸ et R⁹, identiques ou différents, représentent un groupe tel que défini ci-dessus pour R¹⁰; ou forment ensemble une chaîne hydrocarbonée en C₂-C₄, éventuellement interrompue par un hétéroatome choisi parmi O, S et N ;
      - V et V', identiques ou différents, représentent : H, un groupe alkyle ou un halogène,
      - X et X', identiques ou différents, représentent H, un halogène ou un groupe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ ou CONR⁴₂, dans lesquels R⁴ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
      - R² et R³, identiques ou différents, représentent :
         - un groupe (i) alkyle, acyle, aryle, alcène ou alcyne éventuellement substitué,
         - un cycle (ii) carboné, saturé ou non, éventuellement substitué et/ou aromatique,
         - un hétérocycle (iii), saturé ou non, éventuellement substitué,
         - un atome d'hydrogène, des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
         - les radicaux (i), (ii) et (iii) pouvant être substitués avantageusement par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
      - W, identiques ou différents, représentent un radical divalent choisi parmi -O-, -NR⁴-, -NH-, -S-,
      - Sp, identiques ou différents, représentent une rotule constituée d'un radical divalent organique de formule -(CH₂)_{x"'}- dans lequel x"' est compris entre 1 et 20, ce radical pouvant être substitué et/ou contenir au moins un hétéroatome,
      - a = 0 ou 1,
      - m ≥ 1, et lorsque m > 1 les motifs unitaires répétitifs d'indice m sont identiques ou différents,
procédé dans lequel on met en contact :
- au moins un monomère éthyléniquement insaturé de formule **(III)**:

   CXX'(= CV - CV')ₐ = CH₂,
- un composé silicone précurseur comprenant des motifs, identiques ou différents de formule **(IV)**:

   RₓU'_{y}SiO_{[4-(x+y)]/2}

   dans lequel :
   - R, x et y correspondent aux valeurs données précédemment, et le radical monovalent U' est selon la formule suivante **(V)**: 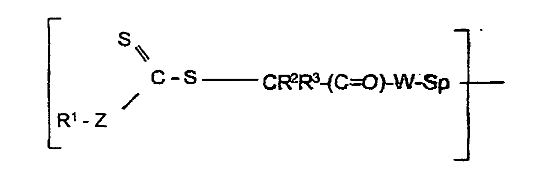
   - et un initiateur de polymérisation radicalaire.

L'initiateur de polymérisation radicalaire peut être choisi parmi les initiateurs classiquement utilisés en polymérisation radicalaire. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butylperoxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexanecarbonitrite), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
   . les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
   . les persulfates, perborate ou perchlorate de métaux alcalins ou d'ammonium en association avec un bisulfite de métal alcalin, tel que le métabisulfite de sodium, et des sucres réducteurs,
   . les persulfate de métal alcalin en association avec un acide arylphosphinique, tel que l'acide benzène phosphonique et autres similaires, et des sucres réducteurs.

La quantité d'initiateur à utiliser est déterminée de manière à ce que la quantité de radicaux générés soit d'au plus 20 % en mole par rapport à la quantité de composé précurseur silicone **(IV)**, de préférence d'au plus 5 % en mole.

Comme monomère éthyléniquement insaturé, on utilise plus spécifiquement selon l'invention les monomères choisis parmi le styrène ou ses dérivés, le butadiène, le chloroprène, les esters (méth)acryliques, les esters vinyliques, les nitriles vinyliques, les esters vinyliques et les amides des acides carboxyliques insaturés.

Le butadiène et le chloroprène correspondent au cas où a = 1 dans la formule (I) et (III),

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Les esters vinyliques d'acide carboxylique incluent plus particulièrement l'acétate de vinyle, le versatate de vinyle, le propionate de vinyle.

Les amides des acides carboxyliques insaturés incluent plus particulièrement l'acrylamide, le méthacrylamide, le N-méthylolacrylamide ou méthacrylamide, les N-alkylacrylamides.

Il est à noter que le styrène peut être remplacé en totalité ou en partie par des dérivés tels que l'alphaméthylstyrène ou le vinyltoluène.

Les autres monomères éthyléniquement insaturés, utilisables seuls ou en mélanges, ou copolymérisables avec les monomères ci-dessus sont notamment :
- les halogénures de vinyle,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylèneméthacrylate,
- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-(méth)acrylate, le ditertiobutylaminoéthyl-acrylate ou -méthacrylate, le diméthylamino méthyl-acrylamide ou -méthacrylamide. Il est de même possible d'utiliser des monomères zwitterioniques comme par exemple l'acrylate de sulfopropyl (diméthyl)aminopropyle.

Pour la préparation des copolymères hybrides de formule (I) pour lesquels X = H et X' = NH₂, on utilise de préférence à titre de monomères éthyléniquement insaturés les amides de la vinylamine, par exemple le vinylformamide ou le vinylacétamide. Puis le copolymère obtenu est hydrolysé à pH acide ou basique.

Pour la préparation des copolymères hybrides de formule (I) pour lesquels X = H et X' = OH, on utilise de préférence à titre de monomères éthyléniquement insaturés les esters vinyliques d'acide carboxylique, comme par exemple l'acétate de vinyle. Puis le copolymère obtenu est hydrolysé à pH acide ou basique.

Les types et quantités de monomères copolymérisables mis en oeuvre selon la présente invention varient en fonction de l'application finale particulière à laquelle est destiné le copolymère hybride.

Selon une première variante préférée de l'invention, le copolymère hybride silicone et organique est constitué d'un squelette silicone linéaire comprenant de 1 à 300 motifs de formule **(I)**, de préférence 1 à 200, et portant de 1 à 50 radicaux U, de préférence 1 à 10.

Selon une deuxième variante de la présente invention, au moins un des radicaux monovalents U' est de préférence de formule **(VI)**: 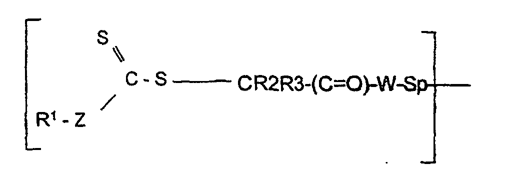 dans laquelle R² et R³, identiques ou différents, représentent un atome d'hydrogène, un groupe cyano, allkoxycarbonyle, alkyle, acyle, aryle, alcène ou alcyne éventuellement substitué; et W est de définition identique à celle donnée précédemment, et de préférence est égal à un atome d'oxygène. A titre d'exemples, on citera les précurseurs silicones dans lesquelles U' correspond à :

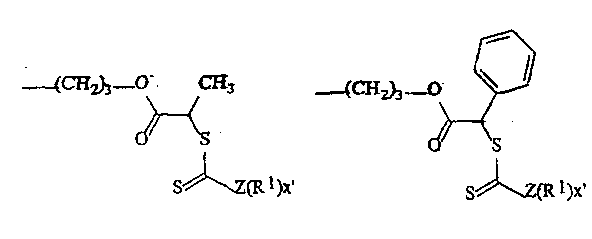

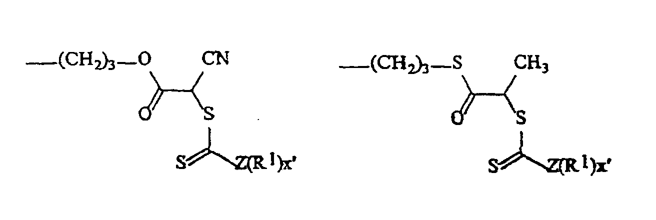

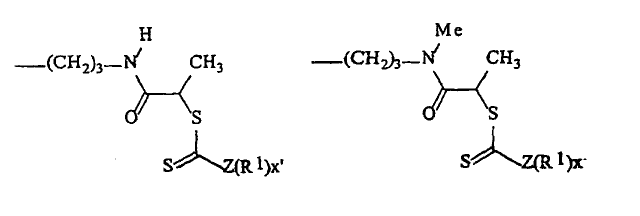

Selon une troisième variante de l'invention, au moins une partie des radicaux monovalents U' de(s) précurseur(s) silicone(s) **(IV)** et donc au moins une partie des groupements U du copolymère hybride obtenu sont tels que Z soit un atome d'oxygène et/ou un atome de soufre.

Selon une quatrième variante selon l'invention, outre des motifs de formule **(I)**, le copolymère hybride silicone et organique selon l'invention peut comprendre des motifs RₓU_{y}F_{z}SiO_{[4-(x+y+z)]/2} **(XIV)** dans lesquels :
- x est égal à 0, 1, 2 ou 3, y est égal à 0, 1, 2 ou 3 et z est égal à 1, 2 ou 3 avec avec 2 ≤ (x+y+z) ≤ 3,
- et F est un groupement porteur d'au moins une fonction tels que hydroxy, alkoxy, thiol, amine, époxy et/ou polyether.

Ces groupements F peuvent éventuellement apporter des propriétés complémentaires et/ou supplémentaires aux copolymères hybrides préparés selon le procédé de l'invention. Ils peuvent être notamment contenus initialement au sein du précurseur silicone de formule **(IV)**.

Outre des copolymères hybrides avec des segments organiques homopolymères, le procédé selon l'invention permet de préparer des polymères hybrides porteurs de groupements organiques à blocs (c'est à dire multiblocs). Pour cela, le procédé consiste à répéter la mise en oeuvre du procédé de préparation précédemment décrit en utilisant :
- des monomères différents de la mise en oeuvre précédente, et
- à la place du composé silicone précurseur (II), le copolymère hybride comprenant des motifs (I) à blocs issu de la mise en oeuvre précédente.

Selon ce procédé de préparation de copolymères multiblocs, lorsque l'on souhaite obtenir des copolymères à blocs homogènes et non à gradient de composition, et si toutes les polymérisations successives sont réalisées dans. le même réacteur, il est essentiel que tous les monomères utilisés lors d'une étape aient été consommés avant que la polymérisation de l'étape suivante ne commence, donc avant que les nouveaux monomères ne soient introduits.

Comme pour le procédé de polymérisation de copolymère monobloc, ce procédé de polymérisation de copolymères à blocs présente l'avantage de conduire à des copolymères à blocs présentant un indice de polydispersité faible. Il permet également de contrôler la masse moléculaire des polymères à blocs.

Le composé silicone précurseur de formule générale **(IV)** utilisé au sein du procédé de préparation de copolymères hybrides selon l'invention peut être obtenu par réaction :
(i) d'une silicone comprenant des motifs de formule **(VII)** :

   RₓU"_{y}SiO_{[4-(x+y)]/2}

   où le radical monovalent U" est selon la formule suivante **(VIII)**: 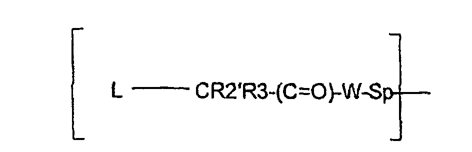 dans laquelle :
   - W et Sp sont de définitions identiques à celles données précédemment,
   - L est un groupement électrofuge, par exemples : Br⁻, Cl⁻, I⁻, OTs⁻, OMs⁻, (C₆H₆)-(C=O)-O⁻, (CH₃)-(C=O)-O⁻, (CF₃)-(C=O)-O⁻.
(ii) avec un composé choisi parmi ceux de formules générales suivantes **(IX), (X)** ou (XI) : 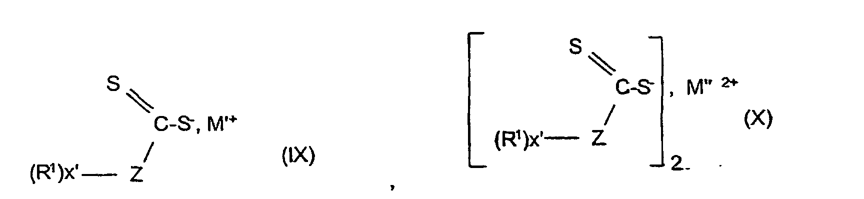 et 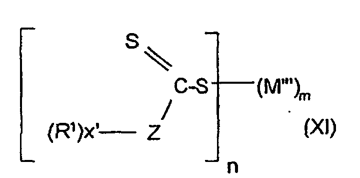 dans lesquelles :
   - M'⁺ représente K⁺, Na⁺, NR₄⁺, ou PR₄^{+,} R étant de définition similaire à celle donnée pour R de la formule (I),
   - M"²⁺ représente un métal alcalino-terreux tels que Ca²⁺, Ba²⁺ et Sr²⁺⁺,
   - M"' représente Zn, Cd, m est égal à 1 ou 2, n est égal à 1, 2, 3 ou 4 et de préférence m est égal à 1 et n est égal à 2.

Cette silicone de formule **(VII)** peut être notamment obtenue à partir (i) d'une silicone comprenant des motifs de formule **(XII)** :RₓU'''_{y}SiO_{[4-(x+y)]/2} où le radical monovalent U''' est de formule **(XIII)** : -Sp-WH et (ii) d'un composé de formule :

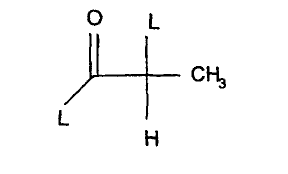

Les copolymères hybrides préparés selon le procédé de l'invention présente l'avantage de conduire à un indice de polydispersité faible. Ce procédé permet également de contrôler la masse moléculaire de ces polymères. L'invention concerne donc aussi ces polymères hybrides.

Les copolymères hybrides préférés sont ceux présentant au moins un bloc choisi parmi le polystyrène, le polyacrylate de méthyle, le polyacrylate d'éthyle, le polyacrylate de tertiobutyle, le polyacétate de vinyle, le polyacrylate de butyle, te polyacrylamide, le polyacrylate de 2-diméthyl-aminoéthyle et/ou le polyacrylate de 2-hydroxyéthyle.

Ces polymères présentent, en général, un indice de polydipersité d'au plus 2, et de préférence d'au plus 1,5.

La polymérisation peut être réalisée en masse, en solution ou en émulsion. De préférence, elle est mise en oeuvre en émulsion.

De préférence, le procédé est mis en oeuvre de manière semi-continue.

La température peut varier entre la température ambiante et 150°C selon ta nature des monomères utilisés.

En général, au cours de la polymérisation, la teneur instantanée en copolymère par rapport à la quantité instantanée en monomère et copolymère est comprise entre 50 et 99 % en poids, de préférence entre 75 et 99 %, encore plus préférentiellement entre 90 et 99 %. Cette teneur est maintenue, de manière connue, par contrôle de la température, de la vitesse d'addition des réactifs et de l'initiateur de polymérisation.

Le procédé est généralement mis en oeuvre en l'absence de source UV.

### EXEMPLES.

Les exemples suivants illustrent l'invention sans toutefois en limiter la portée.

### Exemple 1.

### A. Schéma réactionnel.

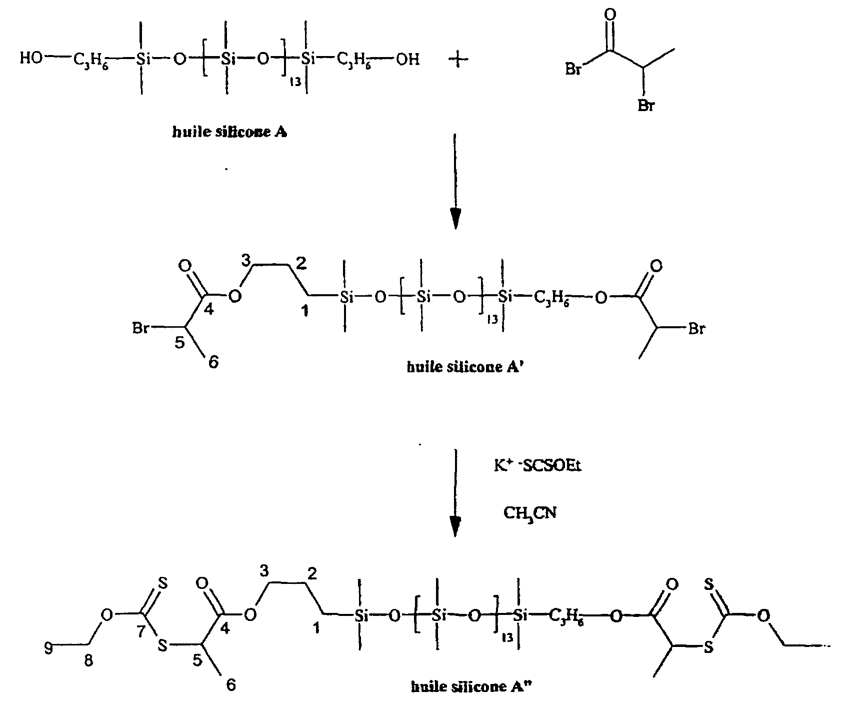

### B. Préparation du produit A'.

A une solution de 10 g d'huile silicone A (1 équivalent) et de 2,6 g (4 équivalents) de pyridine dans de l'éther (200 ml), est additionné goutte à goutte et à température ambiante, 1,9 ml (2,4 équivalents) de bromure de 2-bromo-propionyle.

Après une nuit d'agitation à température ambiante, 50 ml d'eau sont additionnés au mélange réactionnel. La phase aqueuse est ensuite extraite par 2 x 100 ml d'acétate d'éthyle.

Les phases organiques réunies sont ensuite lavées successivement par une solution aqueuse de NaOH (1 M), une solution aqueuse HCl 10 %, de l'eau et de la saumure, puis séchées sur du sulfate de magnésium. Les solvants sont ensuite évaporés. Le produit brut obtenu est ensuite chromatographié sur calanne de silice (heptane 9 / éther 1) pour donner 11 g d'huile silicone A'.

### C. Préparation du précurseur silicone A".

A une solution, de 2,22 g (4 équivalents) de sel de xanthate (K⁺,⁻SCSOEt) dans de l'acétonitrile (150 ml), sont additionnés 5 g (1 équivalent) de produit A' à température ambiante. Le milieu est agitée pendant 4 heures à température ambiante.

Le solvant est alors évaporé sous pression réduite, puis le solide obtenu est mélangé avec de l'éther et filtré sur fritté. Le solvant est alors évaporé pour donner 5,2 g de précurseur A".

### Exemple 2.

### A. Schéma réactionnel.

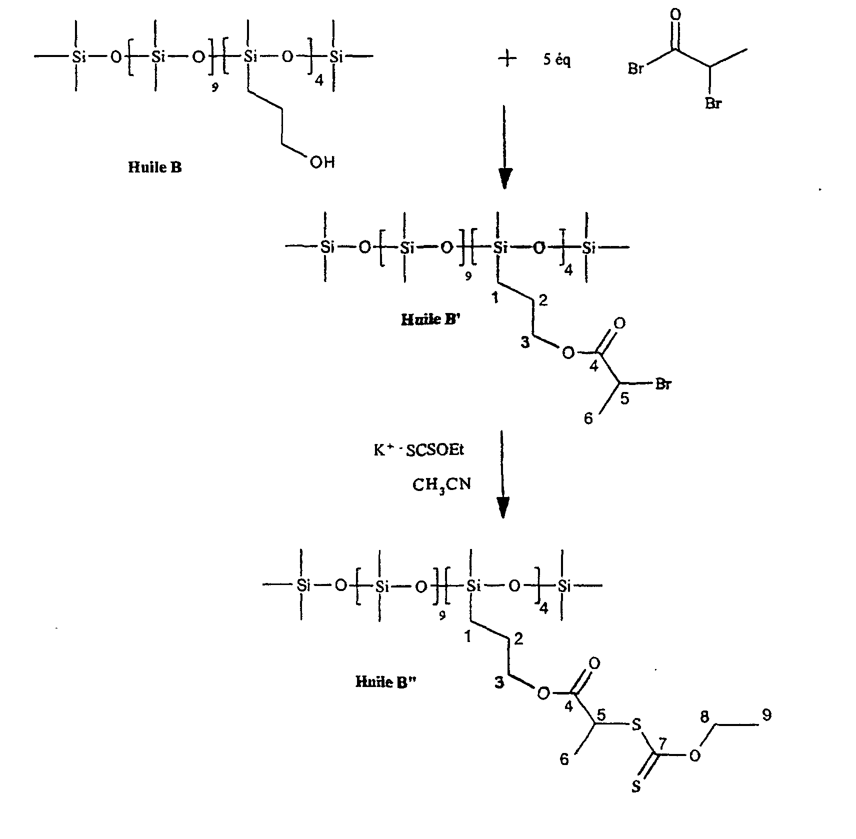

### B. Préparation de l'huile silicone B'.

A une solution, de 10 g d'huile B (1 équivalent) et de 6,2 g (10 équivalents) de pyridine dans de l'éther (300 ml), est additionné goutte à goutte et à température ambiante, 4,16 ml (5 équivalents) de bromure de 2-bromo-propionyle.

Après 2 heures d'agitation à température ambiante, 200 ml de CH₂Cl₂ sont additionnés.

Le précipité obtenu suite à cet ajout est filtré sur fritté, la phase organique est lavée successivement avec une solution aqueuse HCl 10 %, de l'eau et de la saumure, puis séchées sur du sulfate de magnésium. Les solvants sont ensuite évaporés pour donner 13,5 g de produit B' sur lequel des OH libres sont encore présents (28 % de OH d'après le spectre RMN ¹H).

### C. Préparation du précurseur silicone B".

A une solution, de 4,6 g (8 équivalents) de sel de xanthate (K⁺,⁻SCSOEt) dans de l'acétonitrile (300 ml), sont additionnés 6,5 g (1 équivalent) de produit B' à température ambiante. Après 2 heures d'agitation à température ambiante un spectre RMN ¹H du mélange réactionnel est effectué. La disparition des doublets caractéristiques des CH₃ en β des carbonyles, nous montre que la totalité du produit de départ B' a été consommée.

80 % du solvant est alors évaporé sous pression réduite, puis la solution obtenue est mélangée avec de l'éther et filtré sur fritté. Le solvant est alors évaporé pour donner 11,8 g de précurseur B".

30 % de OH libres sont encore présents d'après le spectre RMN ¹H.

### Exemple 3: Préparation d'un copolymère tribloc polyacrylate d'éthyle-b-polydiméthylsiloxane-b-polyacrylate d'éthyle.

0.1 g de précurseur A" de l'exemple 1, 1.39 g d'acrylate d'éthyle, 2 g de toluène et 2.28 mg d'AIBN sont placés dans un tube de Carius. Trois cycles de 'congélation-vide-retour à l'ambiante' sont effectués sur le contenu du tube. Le tube est ensuite scellé sous vide à la flamme, puis le tube est placé dans un bain thermostaté à 80°C pendant 8 heures. Le tube est ensuite refroidi puis ouvert.

Son contenu est analysé par chromatograhie en phase gazeuse GPC (THF) :
- Masse molaire moyenne en nombre (Mₙ) =15800 g/mol.
- Indice de polydispersité (Ip= M_{w}/Mₙ) = 1.42.
- Taux de conversion= 89 % (GPC).

### Exemple 4: Préparation d'un copolymère tribloc polyacétate de vinyle-b-polydiméthylsiloxane-b- polyacétate de vinyle.

0.1 g du précurseur A" de l'exemple 1, 0.59 g d'acétate de vinyle, 1.05 g de cyclohexane et 2.28 mg d'AIBN sont placés dans un tube de Carius. Trois cycles de 'congélation-vide-retour à l'ambiante' sont effectués sur le contenu du tube. Le tube est ensuite scellé sous vide à la flamme, puis le tube est placé dans un bain thermostaté à 80°C pendant 4 heures. Le tube est ensuite refroidi puis ouvert.

Son contenu est analysé par chromatographie en phase gazeuse GPC (THF) :
- Mₙ = 4200 g/mol.
- Ip =1.35.
- Taux de conversion = 62 % (GPC).

## Revendications

1. Procédé de préparation par activation thermique de copolymères hybrides silicones et organiques comprenant des motifs **(I)** :
RₓU_{y}SiO_{[4-(x+y)]/2}
dans lesquels:
- x est égal à 0, 1, 2 ou 3, y est égal à 0, 1, 2 ou 3 avec 2 ≤ (x+y) ≤ 3 et y est différent de 0 pour au moins un des motifs du copolymère hybride,
• les symboles R, identiques ou différents, représentent :
· un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué,
· un radical aryle contenant entre 6 et 12 atomes de carbone pouvant être substitué, de préférence phényle ou dichlorophényle,
· une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
• les symboles U, identiques ou différents, représentent **(II)**: 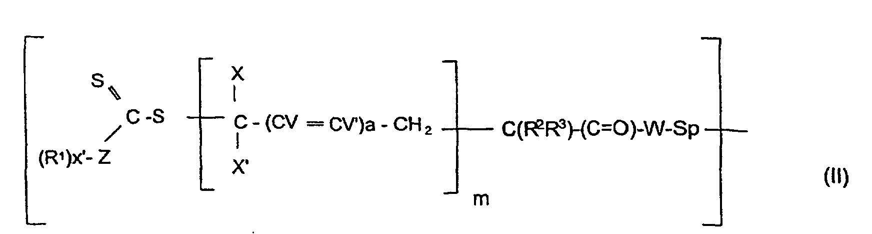 dans lequel :
- x' = 1, 2,3 ou 4 en fonction de la valence de Z,
- Z, identiques ou différents, représentent un atome de carbone, soufre, oxygène, phosphore, azote et/ou une valence libre,
- R¹, radicaux identiques ou différents; représentent :
- un groupe (i) alkyle, acyle, aryle, alcène ou alcyne éventuellement substitué,
- un cycle (ii) carboné, saturé ou non, éventuellement substitué et/ou aromatique, et/ou
- un hétérocycle (iii), saturé ou non, éventuellement substitué,
- ces radicaux (i), (ii) et (iii) pouvant être substitués avantageusement par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), et les substituants cationiques (sels d'ammonium quaternaires), R⁵, identiques ou différents, représentant un groupe alkyle ou aryle, et/ou une chaîne polymère,
- un groupement (iv) de formule -CₙF₍₂ₙ₊₁₎ avec n compris entre 1 et 20,
- un groupement (v) de formule suivante : 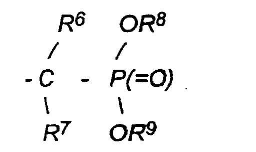 dans laquelle :
- R⁶, R⁷ , identiques ou différents, sont choisis parmi un groupe halogène, -NO₂, -SO₃R¹⁰, -NCO, -CN, -OR¹⁰, -SR¹⁰, -N(R¹⁰)₂, -COOR¹⁰, O₂CR¹⁰, -CON(R¹⁰)₂, -NCO(R¹⁰)₂ et -CₙF₍₂ₙ₊₁₎ avec n compris entre 1 et 20, de préférence égal à 1;
- avec R¹⁰ représentant :
* un atome d'hydrogène,
* ou un radical alkyle, alcényle, alcynyle, cycloacényle, cycloalcynyle, alkaryle, aralkyle, hétéroaryle ou aryle éventuellement condensé à un hétérocycle aromatique ou non; ces radicaux pouvant éventuellement être substitués par :
. un ou plusieurs groupes identiques ou différents, choisis parmi les atomes d'halogènes, =O, =S, -OH, alcoxy, SH, thioalcoxy, NH₂, mono ou di-alkylamino, CN, COOH, ester, amide, CₙF₍₂ₙ₊₁₎ et/ou éventuellement interrompu par un ou plusieurs atomes choisis parmi O, S, N, P ;
. ou un groupe hétérocyclique éventuellement substitué par un ou plusieurs groupes tels que définis précédemment ;
. ou R⁶ et R⁷ forment ensemble avec l'atome de carbone auquel ils sont attachés, un groupe =O, =S, un cycle hydrocarboné ou un hétérocycle ;
- et R⁸ et R⁹, identiques ou différents, représentent un groupe tel que défini ci-dessus pour R¹⁰; ou forment ensemble une chaîne hydrocarbonée en C₂-C₄, éventuellement interrompue par un hétéroatome choisi parmi O, S et N ;
- V et V', identiques ou différents, représentent : H, un groupe alkyle ou un halogène,
- X et X', identiques ou différents, représentent H, un halogène ou un groupe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ ou CONR⁴₂, dans lesquels R⁴ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,
- R² et R³, identiques ou différents, représentent :
- un groupe (i) alkyle, acyle, aryle, alcène ou alcyne éventuellement substitué,
- un cycle (ii) carboné, saturé ou non, éventuellement substitué et/ou aromatique,
- un hétérocycle (iii), saturé ou non, éventuellement substitué,
- un atome d'hydrogène, des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
- les radicaux (i), (ii) et (iii) pouvant être substitués avantageusement par: des groupes phényles substitués, des groupes aromatiques substitués, ou des groupes : alkoxycarbonyle, aryloxycarbonyle (-COOR⁵), carboxy (-COOH), acyloxy (-O₂CR⁵), carbamoyle (-CONR⁵₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR⁵₂), halogène, allyle, époxy, alkoxy (-OR⁵), S-alkyle, S-aryle, des groupes présentant un caractère hydrophile ou ionique tels que les sels alcalins d'acides carboxyliques, tes sels alcalins d'acide sulfonique, les chaînes polyoxyde d'alkylène (POE, POP), les substituants cationiques (sels d'ammonium quaternaires), R⁵, identiques ou différents, représentant un groupe alkyle ou aryle, et/ou une chaîne polymère,
- W, identiques ou différents, est égal à un radical divalent choisi parmi -O-, -NR⁴-, -NH-, -S-,
- Sp, identiques ou différents, est une rotule constituée d'un radical divalent organique de formule -(CH₂)_{x"}- dans lequel x" est compris entre 1 et 20, ce radical pouvant être substitué et/ou contenir au moins un hétéroatome,
- a = 0 ou 1,
- m ≥ 1, et lorsque m > 1 les motifs unitaires répétitifs d'indice m sont identiques ou différents,
procédé dans lequel on met en contact :
- au moins un monomère éthyléniquement insaturé de formule **(III)**:
CXX' (= CV - CV')ₐ = CH₂,
- un composé silicone précurseur comprenant des motifs, identiques ou différents de formule **(IV)**:
RₓU'_{y}SiO_{[4-(x+y)]/2}
dans lequel
- R, x et y correspondent aux valeurs données précédemment,
- et le radical monovalent U' est selon la formule suivante **(V)**: 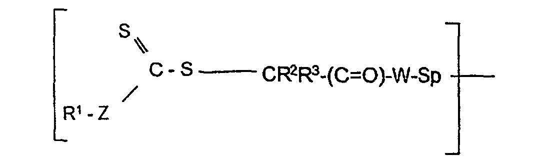
- et un initiateur de polymérisation radicalaire.

2. Procédé selon la revendication 1 **caractérisé en ce que** le copolymère hybride silicone et organique est constitué d'un squelette silicone linéaire comprenant de 1 à 300 motifs de formule **(I)**, de préférence 1 à 200, et portant de 1 à 50 radicaux U, de préférence 1 à 10.

3. Procédé selon l'une quelconque des revendications 1 et 2 **caractérisé en ce qu'**au moins un des symboles U' est de formule suivante **(VI)**: 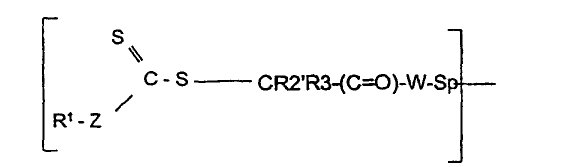 dans laquelle:
- R² et R³, identiques ou différents, représentent un atome d'hydrogène, un groupe cyano, allkoxycarbonyle, alkyle, acyle, aryle, alcène ou alcyne éventuellement substitué;
- et W est de définition identique à celle donnée selon la revendication 1, et de préférence est égal à un atome d'oxygène.

4. Procédé selon l'une quelconque des revendications précédentes, **caractérisé en ce que** Z est un atome d'oxygène ou un atome de soufre.

5. Procédé selon l'une quelconque des revendications précédentes **caractérisé en ce qu'**au moins un radical monovalent U' est choisi parmi les motifs suivants :

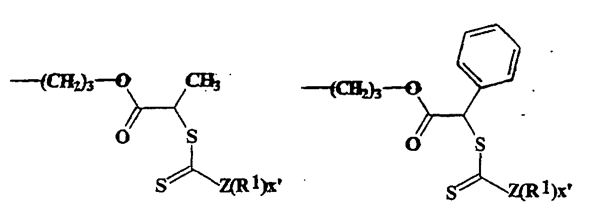

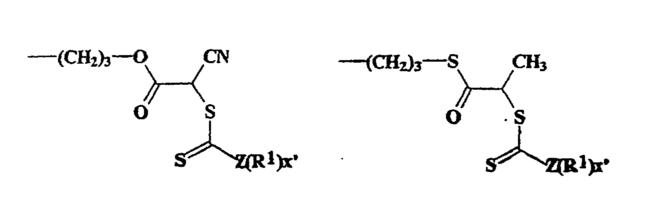

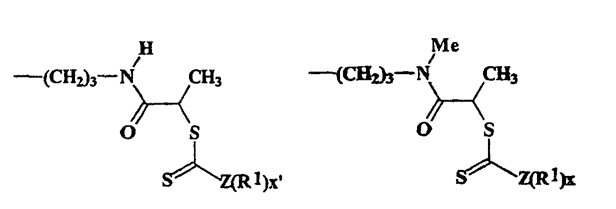

6. Procédé selon l'une quelconque des revendications précédentes, **caractérisé en ce que** le monomère éthyléniquement insaturé est choisi parmi : te styrène ou ses dérivés, le butadiène, le chloroprène, les esters (méth)acryliques, les nitriles vinyliques, les esters vinyliques et les amides des acides carboxyliques insaturés.

7. Procédé selon la revendication précédente, **caractérisé en ce que** le monomère éthyléniquement insaturé est choisi parmi l'acétate de vinyle, le versatate de vinyle et le propionate de vinyle.

8. Procédé de préparation de copolymères hybrides silicones et organiques, **caractérisé en ce qu'**on répète au moins une fois la mise en oeuvre du procédé selon l'une des revendications 1 à 7 en utilisant :
- des monomères différents de la mise en oeuvre précédente, et
- à la place du composé silicone précurseur de formule **(II)** le copolymère hybride comprenant les motifs **(I)** issu de la mise en oeuvre précédente.

9. Procédé selon l'une quelconque des revendications précédentes, **caractérisé en ce que** le composé silicone précurseur de formule générale **(IV)** est un polymère issu de la réaction :
(i) d'une silicone comprenant des motifs de formule **(VII)** :
RₓU"_{y}SiO_{[4-(x+y)]/2}
où le radical monovalent U" est selon la formule suivante **(VIII)**: 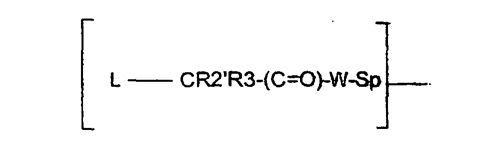 dans laquelle :
- W et Sp sont de définitions identiques à celles données à la revendication 1
- L est un groupement électrofuge, par exemples : Br⁻, Cl⁻, I⁻, OTs⁻, OMs⁻, (C₆H₆)-(C=O)-O⁻, (CH₃)-(C=O)-O⁻, (CF₃)-(C=O)-O⁻.
(ii) avec un composé choisi parmi ceux de formules générales suivantes **(IX), (X)** ou **(XI)** : 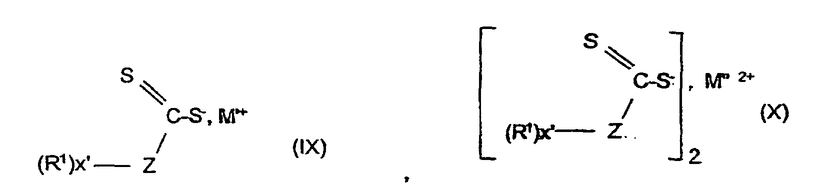 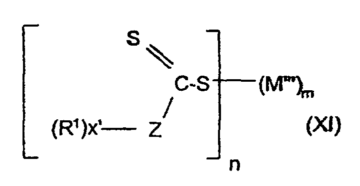 et
dans lesquelles :
- R¹, Z et x' sont de définitions identiques à celles données précédemment,
- M'⁺ représente K⁺, Na⁺, NR₄⁺, ou PR₄⁺' R étant de définition similaire à celle donnée pour R de la formule (I),
- M"²⁺ représente un métal alcalino-terreux tels que Ca²⁺, Ba²⁺ et Sr²⁺⁺,
- M''' représente Zn, Cd, m est égal à 1 ou 2, n est égal à 1, 2, 3 ou 4 et de préférence m est égal à 1 et n est égal à 2.

10. Procédé de préparation de la silicone de formule **(VII)** selon la revendication 9 à partir de :
(i) d'une silicone comprenant des motifs formule **(XII)** :
RₓU'''_{y}SiO_{[4-(x+y)]/2}
où le radical monovalent U''' est selon la formule **(XIII)** : -Sp-WH
(ii) et d'un composé de formule :

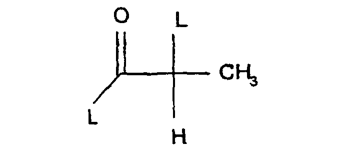

11. Procédé de préparation selon t'une quelconque des revendications 1 à T **caractérisé en ce que** le copolymère Silicone et organique comprend en outre des motifs **(XIV)**:
RₓU_{y}F_{z}SiO_{[4-(x+y+z)]/2}
dans lesquels:
- x est égal à 0, 1, 2 ou 3, y est égal à 0, 1, 2 ou 3 et z est égal à 1, 2 ou 3 avec avec 2 ≤ (x+y+z) ≤ 3,
- F est un groupement porteur d'au moins une fonction tel que hydroxy, alkoxy, thiol, amine, époxy et/ou polyether.

12. Copolymère susceptible d'être obtenu par le procédé selon l'une quelconque des revendications 1 à 8 et 11.

13. Copolymère selon la revendication 12 **caractérisé en ce que** le squelette silicone présente au moins un bloc choisi parmi le polystyrène, le polyacrylate de méthyle, le polyacrylate d'éthyle, le polyacrylate de tertiobutyle, le polyacétate de vinyle, le polyacrylate de butyle, le polyacrylamide, le polyacrylate de 2-diméthyl-aminoéthyle et le polyacrylate de 2-hydroxyéthyle.

14. Copolymère selon l'une quelconque des revendications 12 et 13 **caractérisé en ce qu'**il présente un indice de polydispersité d'au plus 2.

15. Copolymère selon la revendication précédente **caractérisé en ce qu'**il présente un indice de polydispersité d'au plus 1,5.

## Patentansprüche

1. Verfahren zur Herstellung durch thermische Aktivierung von siliciumorganischen Hybrid-Copolymeren, umfassend Struktureinheiten (I)
RₓU_{y}SiO_{[4-(x+y)]/2}
in denen
- x gleich 0, 1, 2 oder 3 ist, y gleich 0, 1, 2 oder 3 ist, mit 2 ≤ (x+y) ≤ 3 und y ist von 0 verschieden bei mindestens einer der Struktureinheiten des Hybrid-Copolymers,
• die Symbole R, gleich oder verschieden, darstellen:
. einen linearen oder verzweigten Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
. einen Rest Cycloalkyl, enthaltend 5 bis 8 cyclische Kohlenstoffatome, gegebenenfalls substituiert,
. einen Rest Aryl, enthaltend zwischen 6 und 12 Kohlenstoffatome, der substituiert sein kann, vorzugsweise Phenyl oder Dichlorphenyl,
. einen Teil Aralkyl, der einen Teil Alkyl besitzt, enthaltend zwischen 5 und 14 Kohlenstoffatome, und einen Teil Aryl, enthaltend zwischen 6 und 12 Kohlenstoffatome, gegebenenfalls substituiert an dem Teil Aryl durch Halogene, Alkyle und/oder Alkoxyle mit 1 bis 3 Kohlenstoffatomen,
• die Symbole U, gleich oder verschieden, (II) darstellen: 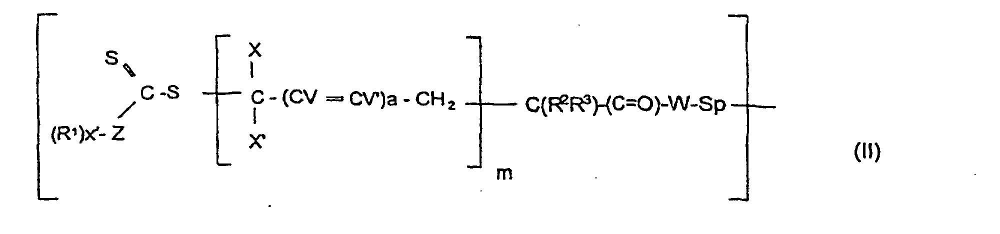
worin
- x' = 1, 2, 3 oder 4 ist, in Abhängigkeit von der Valenz von Z,
- Z, gleich oder verschieden, ein Atom von Kohlenstoff, Schwefel, Sauerstoff, Phosphor, Stickstoff und/oder eine freie Valenz darstellt,
- R¹, gleiche oder verschiedene Reste, darstellen:
- eine Gruppe (i) Alkyl, Acyl, Aryl, Alken oder Alkin, gegebenenfalls substituiert,
- einen Kohlenstoff-Ring (ii), gesättigt oder ungesättigt, gegebenenfalls substituiert und/oder aromatisch, und/oder
- einen Heterocyclus (iii), gesättigt oder ungesättigt, gegebenenfalls substituiert,
- wobei diese Reste (i), (ii) und (iii) vorteilhafterweise substituiert sein können durch substituierte Gruppen Phenyl, substituierte aromatische Gruppen oder Gruppen: Alkoxycarbonyl, Aryloxycarbonyl (-COOR⁵), Carboxy (-COOH), Acyloxy (-O₂CR⁵), Carbamoyl (-CONR⁵₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR⁵₂), Halogen, Allyl, Epoxy, Alkoxy (-OR⁵), S-Alkyl, S-Aryl, Gruppen, die einen ionischen oder hydrophilen Charakter aufweisen, wie die Alkalisalze von Carbonsäuren, die Alkalisalze von Sulfonsäure, die Polyoxid-Ketten von Alkylen (POE, POP) und die kationischen Substituenten (quaternäre Ammoniumsalze), und R⁵, gleich oder verschieden, eine Gruppe Alkyl oder Aryl und/oder eine Polymerkette darstellt,
- eine Gruppe (iv) der Formel -CₙF₍₂ₙ₊₁₎ mit n zwischen 1 und 20,
- eine Gruppe (v) der folgenden Formel: 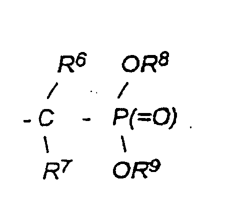 in der
- R⁶, R⁷, gleich oder verschieden, ausgewählt werden unter einer Gruppe Halogen, -NO₂, -SO₃R¹⁰, -NCO, -CN, -OR¹⁰, -SR¹⁰, -N(R¹⁰)₂, -COOR¹⁰, O₂CR¹⁰, -CON(R¹⁰)₂, -NCO(R¹⁰)₂ und -CₙF₍₂ₙ₊₁₎ mit n zwischen 1 und 20, vorzugsweise gleich 1;
- mit R¹⁰, das darstellt:
* ein Wasserstoffatom,
* oder einen Rest Alkyl, Alkenyl, Alkinyl, Cycloalkenyl, Cycloalkinyl, Alkaryl, Aralkyl, Heteroaryl oder Aryl, gegebenenfalls kondensiert mit einem aromatischen oder nicht aromatischen Heterocyclus; wobei diese Reste gegebenenfalls substituiert sein können durch:
. eine oder mehrere gleiche oder verschiedene Gruppen, ausgewählt unter den Halogenatomen, =O, =S, -OH, Alkoxy, SH, Thioalkoxy, NH₂, Mono- oder Dialkylamino, CN, COOH, Ester, Amid, -CₙF₍₂ₙ₊₁₎ und/oder gegebenenfalls unterbrochen durch ein oder mehrere Atome, ausgewählt unter O, S, N, P; oder
. eine heterocyclische Gruppe, gegebenenfalls substituiert durch eine oder mehrere wie vorstehend definierte Gruppen;
. oder R⁶ und R⁷ bilden zusammen mit dem Kohlenstoffatom, an das sie gebunden sind, ein Gruppe =O, =S, einen Kohlenwasserstoff-Ring oder einen heterocyclischen Ring;
- und R⁸ und R⁹, gleich oder verschieden, stellen eine wie oben bei R¹⁰ definierte Gruppe dar; oder bilden zusammen eine Kohlenwasserstoff-Kette mit 2 bis 4 Kohlenstoffatomen, gegebenenfalls unterbrochen durch ein Heteroatom, ausgewählt unter 0, S und N;
- V und V', gleich oder verschieden, bedeuten: H, eine Gruppe Alkyl oder ein Halogen,
- X und X', gleich oder verschieden, bedeuten: H, ein Halogen oder eine Gruppe R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ oder CONR⁴₂, worin R⁴ ausgewählt wird unter den Gruppen Alkyl, Aryl, Aralkyl, Alkaryl, Alken oder Organosilyl, gegebenenfalls perfluoriert und gegebenenfalls substituiert durch eine oder mehrere Gruppen Carboxyl, Epoxy, Hydroxyl, Alkoxy, Amino, Halogen oder Sulfon,
- R² und R³, gleich oder verschieden, darstellen:
- eine Gruppe (i) Alkyl, Acyl, Aryl, Alken oder Alkin, gegebenenfalls substituiert,
- einen Kohlenstoff-Ring (ii), gesättigt oder ungesättigt, gegebenenfalls substituiert und/oder aromatisch,
- einen Heterocyclus (iii), gesättigt oder ungesättigt, gegebenenfalls substituiert,
- ein Wasserstoffatom, Gruppen: Alkoxycarbonyl, Aryloxycarbonyl (-COOR⁵), Carboxy (-COOH), Acyloxy (-O₂CR⁵), Carbamoyl (-CONR⁵₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR⁵₂), Halogen, Allyl, Epoxy, Alkoxy (-OR⁵), S-Alkyl, S-Aryl, Gruppen, die einen ionischen oder hydrophilen Charakter aufweisen, wie die Alkalisalze von Carbonsäuren, die Alkalisalze von Sulfonsäure, die Polyoxid-Ketten von Alkylen (POE, POP), die kationischen Substituenten (quaternäre Ammoniumsalze), und R⁵, gleich oder verschieden, eine Gruppe Alkyl oder Aryl und/oder eine Polymerkette darstellt,
- wobei diese Reste (i), (ii) und (iii) vorteilhafterweise substituiert sein können durch substituierte Gruppen Phenyl, substituierte aromatische Gruppen oder Gruppen: Alkoxycarbonyl, Aryloxycarbonyl (-COOR⁵), Carboxy (-COOH), Acyloxy (-O₂CR⁵), Carbamoyl (-CONR⁵₂), Cyano (-CN), Alkylcarbonyl, Alkylarylcarbonyl, Arylcarbonyl, Arylalkylcarbonyl, Phthalimido, Maleimido, Succinimido, Amidino, Guanidimo, Hydroxy (-OH), Amino (-NR⁵₂), Halogen, Allyl, Epoxy, Alkoxy (-OR⁵), S-Alkyl, S-Aryl, Gruppen, die einen ionischen oder hydrophilen Charakter aufweisen, wie die Alkalisalze von Carbonsäuren, die Alkalisalze von Sulfonsäure, die Polyoxid-Ketten von Alkylen (POE, POP), die kationischen Substituenten (quaternäre Ammoniumsalze), und R⁵, gleich oder verschieden, eine Gruppe Alkyl oder Aryl und/ oder eine Polymerkette darstellt,
- W, gleich oder verschieden, ist gleich einem divalenten Rest, ausgewählt unter -O-, -NR⁴-, -NH-, -S-,
- Sp, gleich oder verschieden, ist ein Gelenk, gebildet aus einem divalenten organischen Rest der Formel -(CH₂)_{x"}-, worin x" zwischen 1 und 20 beträgt, wobei dieser Rest substituiert sein und/oder mindestens ein Heteroatom enthalten kann,
- a = 0 oder 1,
- m ≥ 1 und wenn m > 1 ist, sind die wiederkehrenden Struktureinheiten des Index m gleich oder verschieden,
wobei man in dem Verfahren in Kontakt bringt:
- mindestens ein ethylenisch ungesättigtes Monomer der Formel (III)
CXX' (=CV - CV')ₐ = CH₂
- eine Silicon-Vorläuferverbindung, umfassend gleiche oder verschiedene Struktureinheiten der Formel (IV)
RₓU'_{y}SiO_{[4-(x+y)]/2}
worin
- R, x und y den vorstehend angegebenen Werten entsprechen, und
- der monovalente Rest U' der folgenden Formel (V) entspricht: 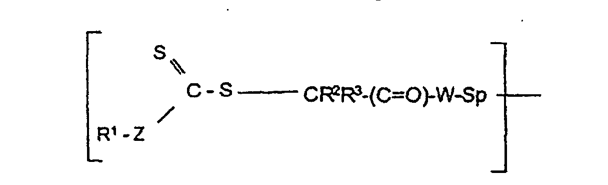
- und einen Initiator für die radikalische Polymerisation.

2. Verfahren nach Anspruch 1, **dadurch gekennzeichnet, daß** das siliciumorganische Hybrid-Copolymer aus einem linearen Silicongerüst besteht, das 1 bis 300, vorzugsweise 1 bis 200 Struktureinheiten der Formel (I) aufweist, und das 1 bis 50, vorzugsweise 1 bis 10 Reste U trägt.

3. Verfahren nach irgendeinem der Ansprüche 1 und 2, **dadurch gekennzeichnet, daß** mindestens eines der Symbole U' die folgende Formel (VI) aufweist: 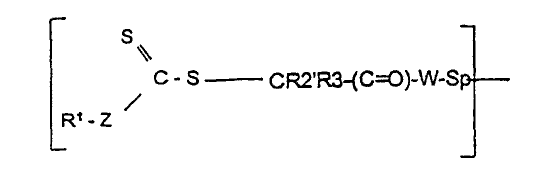 in der
- R² und R³, gleich oder verschieden, ein Wasserstoffatom, eine Gruppe Cyano, Alkoxycarbonyl, Alkyl, Acyl, Aryl, Alken oder Alkin darstellen, gegebenenfalls substituiert; und
- W die gleiche Definition wie in Anspruch 1 angegeben besitzt und vorzugsweise ein Sauerstoffatom bedeutet.

4. Verfahren nach irgendeinem der vorstehenden Ansprüche, **dadurch gekennzeichnet, daß** Z ein Sauerstoff oder ein Schwefelatom ist.

5. Verfahren nach irgendeinem der vorstehenden Ansprüche, **dadurch gekennzeichnet, daß** mindestens ein monovalenter Rest U' unter den folgenden Struktureinheiten ausgewählt wird:

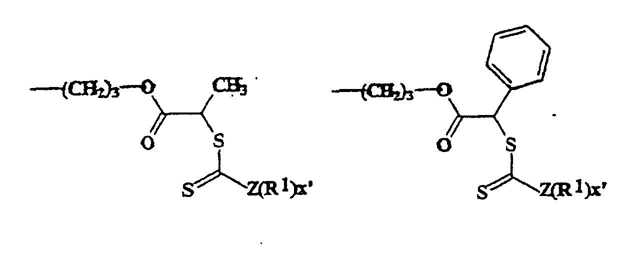

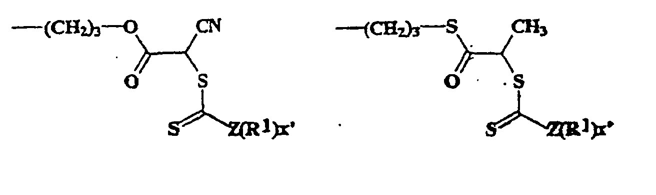

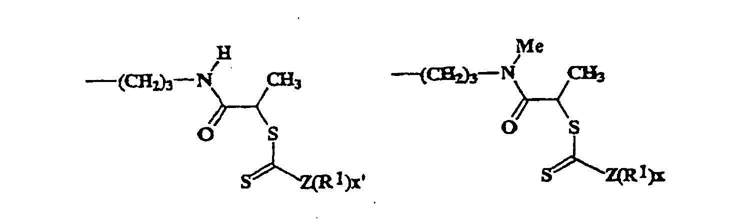

6. Verfahren nach irgendeinem der vorstehenden Ansprüche, **dadurch gekennzeichnet, daß** das ethylenisch ungesättigte Monomer ausgewählt wird unter Styrol oder seinen Derivaten, Butadien, Chloropren, den (Meth)acrylestern, den vinylischen Nitrilen, den vinylischen Estern und den Amiden von ungesättigten Carbonsäuren.

7. Verfahren nach dem vorstehenden Anspruch, **dadurch gekennzeichnet, daß** das ethylenisch ungesättigte Monomer ausgewählt wird unter Vinylacetat, Vinylversatat und Vinylpropionat.

8. Verfahren zur Herstellung von siliciumorganischen Hybrid-Copolymeren, **dadurch gekennzeichnet, daß** man mindestens einmal die Durchführung des Verfahrens nach einem der Ansprüche 1 bis 7 wiederholt, indem man verwendet:
- vom vorhergehenden Einsatz unterschiedliche, Monomere, und
- anstelle der Silicon-Vorläuferverbindung der Formel (II) das Hybrid-Copolymer, das Struktureinheiten (I) von dem vorhergehenden Einsatz umfaßt.

9. Verfahren nach einem der vorstehenden Ansprüche, **dadurch gekennzeichnet, daß** die Silicon-Vorläuferverbindung der allgemeinen Formel (IV) ein Polymer ist, das aus der folgenden Reaktion stammt:
(i) eines Silicons, umfasserd Struktureinheiten der Formel (VII)
RₓU"_{y}SiO_{[4-(x+y)]/2}
worin der monovalente Rest U" der folgenden Formel (VIII) 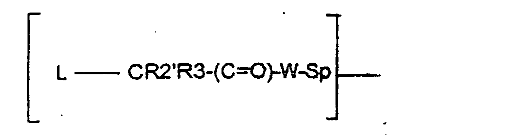 entspricht, in der
- W und Sp die gleichen Definitionen besitzen wie in Anspruch 1 angegeben,
- L eine elektrofuge Gruppe ist, beispielsweise Br⁻, Cl⁻, I⁻, OTs⁻, OMs⁻, (C₆H₆)-(C=O)-O⁻, (CH₃)-(C=O)-O⁻, (CF₃)-(C=O)-O⁻,
(ii) mit einer Verbindung, ausgewählt unter denen der folgenden allgemeinen Formeln (IX), (X) oder (XI) 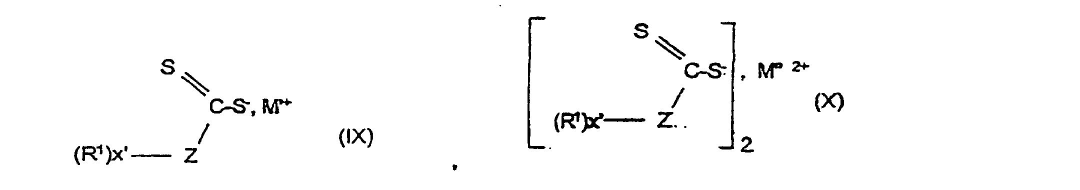 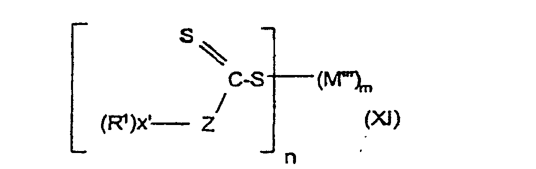 und in denen
- R¹, Z und x' die gleichen Definitionen besitzen wie vorstehend angegeben,
- M'⁺ K⁺, Na⁺, NR₄⁺ oder PR₄⁺ darstellt und R die gleiche Bedeutung besitzt, wie für R in der Formel (I) angegeben,
- M"²⁺ ein Erdalkalimetall wie Ca²⁺, Ba²⁺ und Sr²⁺ darstellt,
- M"' Zn, Cd darstellt, m gleich 1 oder 2 ist, n gleich 1, 2, 3 oder 4 ist und vorzugsweise m gleich 1 ist und n gleich 2 ist.

10. Verfahren zur Herstellung des Silicons der Formel (VII) nach Anspruch 9, ausgehend von:
(i) einem Silicon, das Struktureinheiten der Formel (XII)
RₓU"'_{y}SiO_{[4-(x+y)]/2}
umfaßt, worin der monovalente Rest U"' der Formel (XIII): -Sp-WH entspricht,
(ii) und einer Verbindung der Formel

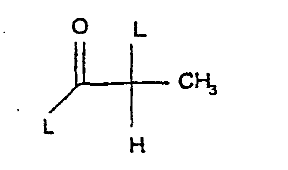

11. Verfahren zur Herstellung nach irgendeinem der Ansprüche 1 bis 7, **dadurch gekennzeichnet, daß** das siliciumorganische Copolymer außerdem Struktureinheiten (XIV)
RₓU_{y}F_{z}SiO_{[4-(x+y+z)]/2}
umfaßt, in denen
- x gleich 0, 1, 2 oder 3 ist, y gleich 0, 1, 2 oder 3 ist und z gleich 1, 2 oder 3 ist, mit 2 ≤ (x+y+z) ≤ 3,
- F eine Gruppe ist, die mindestens eine Funktion trägt wie Hydroxy, Alkoxy, Thiol, Amin, Epoxy und/oder Polyether.

12. Copolymer, das geeignet ist, durch das Verfahren nach irgendeinem der Ansprüche 1 bis 8 und 11 erhalten zu werden.

13. Copolymer nach Anspruch 12, **dadurch gekennzeichnet, daß** das Silicongerüst mindestens einen Block aufweist, ausgewählt unter Polystyrol, Methyl-polyacrylat, Ethyl-polyacrylat, tert.-Butylpolyacrylat, Vinyl-polyacrylat, Butyl-polyacrylat, Polyacrylamid, 2-Dimethyl-aminoethyl-polyacrylat und 2-Hydroxyethyl-polyacrylat.

14. Copolymer nach irgendeinem der Ansprüche 12 und 13, **dadurch gekennzeichnet, daß** es einen Index der Polydispersität von höchstens 2 aufweist.

15. Copolymer nach dem vorstehenden Anspruch, **dadurch gekennzeichnet, daß** es einen Index der Polydispersität von höchstens 1,5 aufweist.

## Claims

1. Process for the preparation, by thermal activation, of silicone and organic hybrid copolymers comprising units (I):
RₓU_{y}SiO_{[4-(x+y)]/2}
in which:
- x is equal to 0, 1, 2 or 3, y is equal to 0, 1, 2 or 3 with 2 ≤ (x+y) ≤ 3 and y is other than 0 for at least one of the units of the hybrid copolymer,
• the symbols R, which may be identical or different, represent:
a linear or branched alkyl radical containing 1 to 8 carbon atoms, optionally substituted with at least one halogen, preferably fluorine, the alkyl radicals preferably being methyl, ethyl, propyl, octyl and 3,3,3-trifluoropropyl,
a cycloalkyl radical containing between 5 and 8 ring carbon atoms, which is optionally substituted,
an aryl radical containing between 6 and 12 carbon atoms, which may be substituted, preferably phenyl or dichlorophenyl,
an aralkyl portion having an alkyl portion containing between 5 and 14 carbon atoms and an aryl portion containing between 6 and 12 carbon atoms, optionally substituted on the aryl portion with halogens, alkyls and/or alkoxyls containing 1 to 3 carbon atoms,
• the symbols U, which may be identical or different, represent (II): 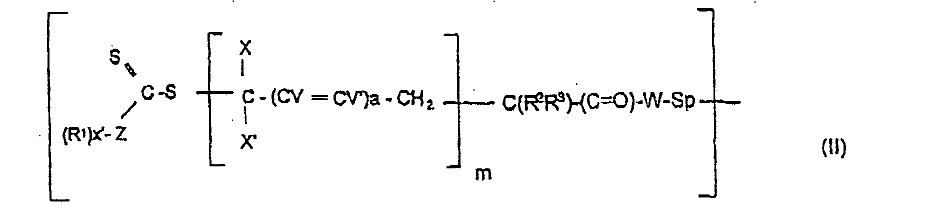 in which:
- x' = 1, 2, 3 or 4 depending on the valency of Z,
- Z, which may be identical or different, represent a carbon, sulphur, oxygen, phosphorus or nitrogen atom and/or a free valency,
- R¹, which radicals may be identical or different, represent:
- an optionally substituted alkyl, acyl, aryl, alkene or alkyne group (i),
- a saturated or unsaturated, optionally substituted and/or aromatic carbon-based ring (ii), and/or
- a saturated or unsaturated, optionally substituted heterocycle (iii),
- these radicals (i), (ii) and (iii) possibly being advantageously substituted with: substituted phenyl groups, substituted aromatic groups, or groups: alkoxycarbonyl, aryloxycarbonyl (-COOR⁵), carboxyl (-COOH), acyloxy (-O₂CR⁵), carbamoyl (-CONR⁵₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR⁵₂), halogen, allyl, epoxy, alkoxy (-OR⁵), S-alkyl, S-aryl, groups of hydrophilic or ionic nature such as alkaline salts of carboxylic acids, alkaline salts of sulphonic acid, polyalkylene oxide (PEO, PPO) chains, cationic substituents (quaternary ammonium salts), R⁵, which may be identical or different, representing an alkyl or aryl group, and/or a polymer chain,
- a group (iv) of formula -CₙF₍₂ₙ₊₁₎ with n being between 1 and 20,
- a group (v) of the following formula: 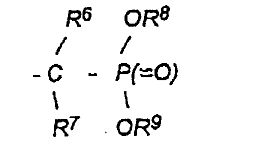 in which:
- R⁶, R⁷, which may be identical or different, are chosen from a halogen group, -NO₂, -SO₃R¹⁰, -NCO, -CN, -OR¹⁰, -SR¹⁰, -N(R¹⁰)₂, -COOR¹⁰, -O₂CR¹⁰, -CON(R¹⁰)₂, -NCO(R¹⁰)₂ and -CₙF₍₂ₙ₊₁₎ with n being between 1 and 20 and preferably equal to 1;
- with R¹⁰ representing:
* a hydrogen atom,
* or an alkyl, alkenyl, alkynyl, cycloalkenyl, cycloalkynyl, alkaryl, aralkyl, heteroaryl or aryl radical optionally fused to an aromatic or nonaromatic heterocycle; these radicals possibly being substituted with:
. one or more groups, which may be identical or different, chosen from halogen atoms, =O, =S, -OH, alkoxy, SH, thioalkoxy, NH₂, monoalkylamino, dialkylamino, CN, COOH, ester, amide or CₙF₍₂ₙ₊₁₎ and/or optionally interrupted with one or more atoms chosen from O, S, N and P;
. or a heterocyclic group optionally substituted with one or more groups as defined above;
. or R⁶ and R⁷ together form, with the carbon atom to which they are attached, a group =O, =S, a hydrocarbon-based ring or a heterocycle; and
- R⁸ and R⁹, which may be identical or different, represent a group as defined above for R¹⁰; or together form a C₂-C₄ hydrocarbon-based chain optionally interrupted with a hetero atom chosen from 0, S and N;
- V and V', which may be identical or different, represent: H, an alkyl group or a halogen,
- X and X', which may be identical or different, represent H, a halogen or a group R⁴, OR⁴, O₂COR⁴, NHCOH, OH, NH₂, NHR⁴, N(R⁴)₂, (R⁴)₂N⁺O⁻, NHCOR⁴, CO₂H, CO₂R⁴, CN, CONH₂, CONHR⁴ or CONR⁴₂, in which R⁴ is chosen from alkyl, aryl, aralkyl, alkaryl, alkene and organosilyl groups, optionally perfluorinated and optionally substituted with one or more carboxyl, epoxy, hydroxyl, alkoxy, amino, halogen or sulphonic groups,
- R² and R³, which may be identical or different, represent:
- an optionally substituted alkyl, acyl, aryl, alkene or alkyne group (i),
- a saturated or unsaturated, optionally substituted and/or aromatic carbon-based ring (ii),
- a saturated or unsaturated, optionally substituted heterocycle (iii),
- a hydrogen atom or groups: alkoxycarbonyl, aryloxycarbonyl (-COOR⁵), carboxyl (-COOH), acyloxy (-O₂CR⁵), carbamoyl (-CONR⁵₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR⁵₂), halogen, allyl, epoxy, alkoxy (-OR⁵), S-alkyl, S-aryl, groups of hydrophilic or ionic nature such as alkaline salts of carboxylic acids, alkaline salts of sulphonic acid, polyalkylene oxide (PEO, PPO) chains, cationic substituents (quaternary ammonium salts), R⁵, which may be identical or different, representing an alkyl or aryl group, and/or a polymer chain,
- the radicals (i), (ii) and (iii) possibly being advantageously substituted with: substituted phenyl groups, substituted aromatic groups, or groups: alkoxycarbonyl, aryloxycarbonyl (-COOR⁵), carboxyl (-COOH), acyloxy (-O₂CR⁵), carbamoyl (-CONR⁵₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR⁵₂), halogen, allyl, epoxy, alkoxy (-OR⁵), S-alkyl, S-aryl, groups of hydrophilic or ionic nature such as alkaline salts of carboxylic acids, alkaline salts of sulphonic acid, polyalkylene oxide (PEO, PPO) chains, cationic substituents (quaternary ammonium salts), R⁵, which may be identical or different, representing an alkyl or aryl group, and/or a polymer chain,
- W, which may be identical or different, is equal to a divalent radical chosen from -O-, -NR⁴-, -NH- and -S-,
- Sp, which may be identical or different, is a coupling unit consisting of a divalent organic radical of formula -(CH₂)_{x''}-, in which x'' is between 1 and 20, this radical possibly being substituted with and/or containing at least one hetero atom,
- a = 0 or 1,
- m ≥ 1, and, when m > 1, the repeating unit moieties of index m are identical or different,
a process in which the following are placed in contact:
- at least one ethylenically unsaturated monomer of formula (III):
CXX'(=CV-CV')ₐ = CH₂,
- a precursor silicone compound comprising units, which may be identical or different, of formula (IV):
RₓU'_{y}SiO_{[4-(x+y)]/2}
in which:
- R, x and y correspond to the values given above,
and the monovalent radical U' is according to formula (V) below: 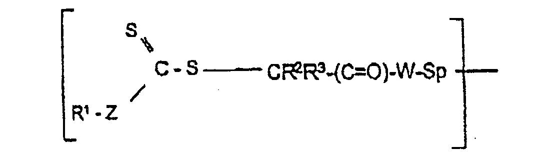
- and a free-radical polymerization initiator.

2. Process according to Claim 1, **characterized in that** the silicone and organic hybrid copolymer consists of a linear silicone skeleton comprising from 1 to 300 and preferably 1 to 200 units of formula (I), bearing from 1 to 50 and preferably 1 to 10 radicals U.

3. Process according to either of Claims 1 and 2, **characterized in that** at least one of the symbols U' has the formula (VI) below: 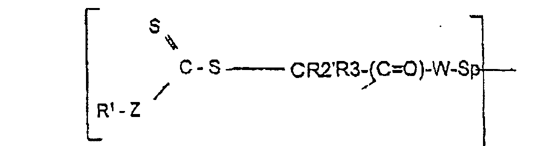 in which:
- R² and R³, which may be identical or different, represent a hydrogen atom or a cyano, alkoxycarbonyl, alkyl, acyl, aryl, alkene or alkyne group, which is optionally substituted; and
- W has a definition identical to that given in Claim 1, and is preferably equal to an oxygen atom:

4. Process according to any one of the preceding claims, **characterized in that** Z is an oxygen atom or a sulphur atom.

5. Process according to any one of the preceding claims, **characterized in that** at least one monovalent radical U' is chosen from the following units:

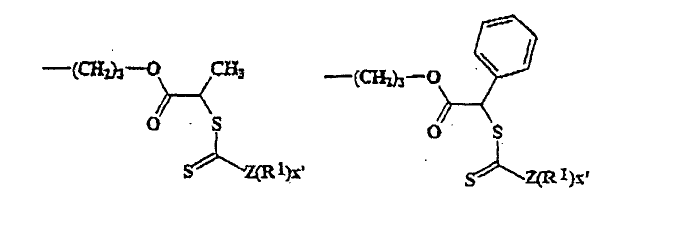

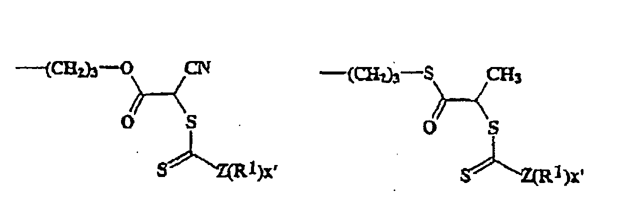

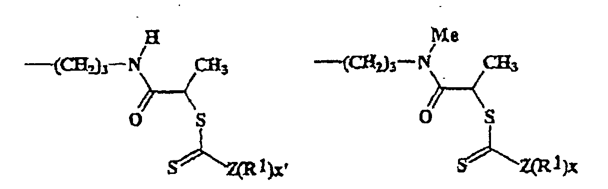

6. Process according to any one of the preceding claims, **characterized in that** the ethylenically unsaturated monomer is chosen from: styrene or derivatives thereof, butadiene, chloroprene, (meth)acrylic esters, vinyl nitriles, vinyl esters and unsaturated carboxylic acid amides.

7. Process according to the preceding claim, **characterized in that** the ethylenically unsaturated monomer is chosen from vinyl acetate, vinyl versatate and vinyl propionate.

8. Process for preparing silicone and organic hybrid copolymers, **characterized in that** the implementation of the process according to one of Claims 1 to 7 is repeated at least once, using:
- different monomers than in the preceding implementation, and
- in place of the precursor silicone compound of formula (II), the hybrid copolymer comprising the units (I) derived from the preceding implementation.

9. Process according to any one of the preceding claims, **characterized in that** the precursor silicone compound of general formula (IV) is a polymer derived from the reaction:
(i) of a silicone comprising units of formula (VII):
RₓU"_{y}SiO_{[4-(x+y)]/2}
in which the monovalent radical U" is according to formula (VIII) below: 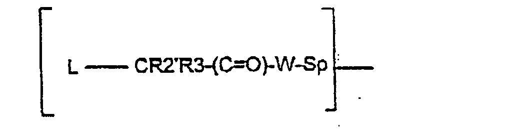 in which:
- W and Sp have definitions identical to those given in Claim 1,
- L is a nucleophilic group, for example: Br⁻, Cl⁻, I⁻, OTs⁻, OMs⁻, (C₆H₆)-(C=O)-O⁻, (CH₃)-(C=O)-O⁻, (CF₃)-(C=O)-O⁻,
(ii) with a compound chosen from those of general formula (IX), (X) or (XI) below: 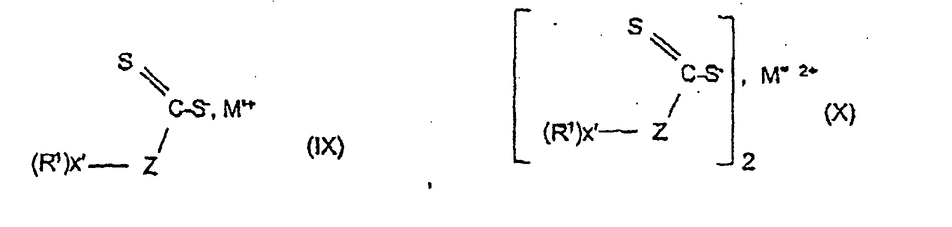 and 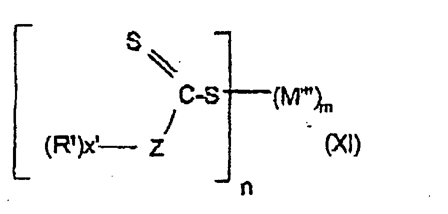 in which:
R¹, Z and x' have definitions identical to those given above,
- M¹⁺ represents K⁺, Na⁺, NR₄⁺ or PR₄⁺, R having a definition similar to that given for R in formula (I),
- M"²⁺ represents an alkaline-earth metal such as Ca²⁺, Ba²⁺ or Sr²⁺⁺,
- M''' represents Zn, Cd, m is equal to 1 or 2, n is equal to 1, 2, 3 or 4 and preferably m is equal to 1 and n is equal to 2.

10. Process for preparing the silicone of formula (VII) according to Claim 9, starting with:
(i) a silicone comprising units of formula (XII):
RₓU'''_{y}SiO_{[4-(x+y)]/2}
in which the monovalent radical U''' is according to formula XIII: -Sp-WH
(ii) and a compound of formula

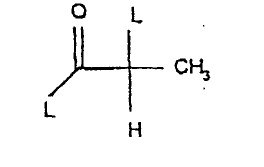

11. Preparation process according to any one of Claims 1 to 7, **characterized in that** the silicone and organic copolymer also comprises units (XIV):
RₓU_{y}F_{z}SiO_{[4-(x+y+z)]/2}
in which:
- x is equal to 0,1, 2 or 3, y is equal to 0, 1, 2 or 3 and z is equal to 1, 2 or 3 with 2 ≤ (x+y+z) ≤ 3,
- F is a group bearing at least one function such as hydroxyl, alkoxy, thiol, amine, epoxy and/or polyether.

12. Copolymer that may be obtained by the process according to any one of Claims 1 to 8 and 11.

13. Copolymer according to Claim 12, **characterized in that** the silicone skeleton contains at least one block chosen from polystyrene, polymethyl acrylate, polyethyl acrylate, poly(ter-butyl acrylate), polyvinyl acetate, polybutyl acrylate, polyacrylamide, poly(2-dimethylaminoethyl acrylate) and poly(2-hydroxyethyl acrylate).

14. Copolymer according to either of Claims 12 and 13, **characterized in that** it has a polydispersity index of not more than 2.

15. Copolymer according to the preceding claim, **characterized in that** it has a polydispersity index of not more than 1.5.
